# EUROPÄISCHE PATENTANMELDUNG

(11) **EP 1 236 938 A1**
(43) Veröffentlichungstag der Anmeldung: **04.09.2002**
(21) Anmeldenummer: 01130234.6
(22) Anmeldetag: 19.12.2001
(51) Int. Cl.: F16K 11/07, F16K 31/122, F15B 13/04

(54) **Mehrwegeventil mit parallelverlaufenden Ventilbohrungen**

(30) Priorität: 26.02.2001 DE 10109206
(71) Anmelder: Rexroth Mecman GmbH, 30453 Hannover (DE)
(72) Erfinder: Liesenhoff, Thomas, 30159 Hannover (DE)
(74) Vertreter: Maiwald Patentanwalts GmbH

(57) **Zusammenfassung**

Um bei einem Mehrwegeventil zum Schalten eines Druckmittelflusses mit einem äußere Fluidanschlüsse aufweisenden Ventilgehäuse (1), das mindestens eine Ventilbohrung (2a, 2b) zur Aufnahme mindestens eines zugeordneten Ventilschiebers (3a, 3b) mit Abschnitten größeren und kleineren Durchmessers enthält, der innerhalb der Ventilbohrung (2a, 2b) über mehrere Dichtelemente (4) gegenüber dem Ventilgehäuse (1) abgedichtet geführt und über stirnseitig angeordnete Antriebsmittel längsbewegbar ist, wobei über dessen Längsbewegung der Druckmittelfluss zwischen den Fluidanschlüssen schaltbar ist, eine für unterschiedliche Ventilfunktionen geeignete kompakte Form des Ventilgehäuses zu schaffen, ist erfindungsgemäß vorgesehen,
dass im Ventilgehäuse (1) mehrere benachbarte und im Wesentlichen auf derselben Höhe parallel verlaufende Ventilbohrungen (2a, 2b) für jeweils zugeordnete einzelne Ventilschieber (3a, 3b) vorgesehen sind, die an derselben benachbarten Antriebsstirnseite (5a, 5b) mit den Antriebsmitteln zusammenwirken und die Seiten der der Antriebsstirnseite (5a, 5b) gegenüberliegenden Koppelstirnseite (9a, 9b) mit mechanischen Kopplungsmitteln korrespondieren, die im Ventilgehäuse (1) befestigt sind.

## Beschreibung

Die Erfindung betrifft ein Mehrwegeventil zum Schalten eines Druckmittelflusses, insbesondere ein pneumatisches Mehrwegeschieberventil, mit einem äußeren Fluidanschlüsse aufweisenden Ventilgehäuse, das mindestens eine Ventilbohrung zur Aufnahme mindestens eines zugeordneten Ventilschiebers mit Abschnitten größeren und kleineren Durchmessers enthält, der innerhalb der Ventilbohrung über mehrere Dichtelemente gegenüber dem Ventilgehäuse abgedichtet geführt und über stirnseitig angeordnete Antriebsmittel längs bewegbar ist, wobei über dessen Längsbewegung der Druckmittelfluss zwischen den Fluidanschlüssen schaltbar ist. Insbesondere bezieht sich die Erfindung auf ein 2x3/2- oder 5/2- oder 5/3-Wegeventil.

Ein gattungsgemäßes Wegeventil ist aus der DE 44 00 760 A1 bekannt. Dieses Mehrwegeventil besteht aus einem Ventilgehäuse mit einer innenliegenden sich axial durch das Ventilgehäuse erstreckenden Ventilbohrung, welche diverse Nuten zur Aufnahme von axial beabstandeten Dichtringen aufweist. Innerhalb der Ventilbohrung ist eine Ventilschieberanordnung platziert, die durch einen einen stirnseitigen Antriebskolben beaufschlagenden Steuerdruck längsbewegbar ist, um die Versorgung zweier äußerer Arbeitsanschlüsse mit Druckmittel zu beeinflussen. Neben dem vorstehend erläuterten statischen Dichtprinzip bei dem die Dichtringe seitens des Ventilgehäuses gehalten sind, ist auch ein Dichtprinzip bekannt, bei dem die Dichtringe innerhalb von Nuten seitens des Ventilschiebers gehalten sind. Die vorliegende Erfindung ist bei einem Mehrwegeventil nach beiden Dichtprinzipen anwendbar.

Die bekannte Ventilschieberanordnung besteht aus zwei separaten Ventilschiebern, von denen jeder mit einem der beiden separaten Arbeitsanschlüsse zusammenwirkt. Beide Ventilschieber sind koaxial hintereinanderliegend und beabstandet voneinander in der durchgängigen Ventilbohrung angeordnet. Die Ventilschieber sind weiterhin unabhängig voneinander je nach Beaufschlagung der ihnen zugeordneten Ansteuerung über einen Steuerdruck längs bewegbar. Auf diese Weise wird die Funktion zweier separater Mehrwegeventile in einem einzigen Ventilgehäuse realisiert. Die zwei Ventilschieber führen in dem gemeinsamen Ventilgehäuse jeweils eine 3/2-Wegeventilfunktion aus, wobei jeder Ventilschieber seinen eigenen Entlüftungsanschluss besitzt und die beiden Ventilschieber vorzugsweise mit einem gemeinsamen Versorgungsanschluss in Verbindung stehen, der benachbart zu den einander zugewandten Enden des Ventilschiebers im Bereich des Zentrums der Ventilbohrung angeordnet ist.

Das vorstehend beschriebene bekannte Mehrwegeventil ist derart ausgebildet, dass die beiden Ventilschieber austauschbar sind, so dass an deren Stelle ein konventioneller, einstückiger Ventilschieber in die Ventilbohrung eingesetzt werden kann, um insoweit eine 5/2- oder 5/3-Wegeventilfunktion zu realisieren.

Bei diesen oder ähnlichen Mehrwegeventilen mit Ventilschieber tritt das Problem auf, dass sich durch die längs durch das Ventilgehäuse erstreckende Ventilbohrung eine ungünstige längsbetonte Form des Ventilgehäuses entsteht. Diese Form steht dem Ziel entgegen, das Ventilgehäuse möglichst kompakt auszugestalten.

Es ist daher die Aufgabe der vorliegenden Erfindung, ein Mehrwegeventil gemäß der vorstehend beschriebenen Art dahingehend weiter zu verbessern, dass eine möglichst kompakte Form des Ventilgehäuses ermöglicht wird, welches für unterschiedliche Ventilfunktionen geeignet ist.

Die Aufgabe wird ausgehend von einem Mehrwegeventil gemäß des Oberbegriffs von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass in einem Ventilgehäuse mehrere benachbarte und im wesentlichen auf derselben Höhe parallel verlaufende Ventilbohrungen für jeweils zugeordnete einzelne Ventilschieber vorgesehen sind, die an derselben benachbarten Antriebsstirnseite mit den Antriebsmitteln zusammenwirken, und die seitens der der Antriebsstirnseite gegenüberliegenden Koppelstirnseite mit mechanischen Kopplungsmitteln korrespondieren, die im Ventilgehäuse befestigt sind.

Durch diese Ausgestaltung wendet sich die Erfindung vom Konzept einer einzigen durchgängigen Ventilbohrung ab und verwendet mehrere einzelne Ventilschieber in Verbindung mit mechanischen Kopplungsmitteln.

Damit schafft die Erfindung die Voraussetzungen dafür, dass das Ventilgehäuse sehr gedrungen und insoweit kompakt gestaltbar ist. Jeder erfindungsgemäß ausgebildete Ventilschieber besitzt eine definierte Koppelstirnseite und eine definierte Antriebsstirnseite. Die Koppelstirnseite wirkt mit den mechanischen Kopplungsmitteln zusammen, wogegen die gegenüberliegende Antriebsstirnseite mit den Antriebsmitteln zur Axialverstellung des Ventilschiebers korrespondiert.

Vorzugsweise sind die mechanischen Kopplungsmittel nach Art eines Wippenelements ausgebildet, welches endseitig mit je einer Koppelstirnseite des Ventilschiebers zusammenwirkt, um eine 5/2- oder 5/3-Wegeventilfunktion zu schaffen. Durch die Wirkung des Wippenelements ist eine unabhängige Bewegung der Ventilschieber nicht möglich. Um eine kraftflussoptimale Anlage des Wippenelements im Mittelbereich der Koppelstirnseite des jeweiligen Ventilschiebers zu ermöglichen, laufen die Enden des Wippenelements im Wesentlichen kugelförmig aus. Es ist jedoch auch denkbar, die Enden des Wippenelements andersartig zu gestalten. Das Ziel sollte jedoch eine kraftflussoptimale mechanische Kopplung sein, was beispielsweise auch durch eine spitze oder gewölbte Ausbildung der Enden des Wippenelements realisierbar ist. Das Wippenelement kann über eine im Mittelbereich angeordnete Durchgangsbohrung unter Verwendung von Stiften oder ähnlichen Befestigungsmitteln wippenartig am Ventilgehäuse befestigt werden. Vorzugsweise sind die mechanischen Kopplungsmittel entfernbar ausgestaltet.

Bei Entfernen der Kopplungsmittel sind diese gegen mit den beiden Ventilschiebern jeweils zusammenwirkende Rückstellfedern austauschbar, um wahlweise eine 2x3/n-Wegeventilfunktion zu schaffen. Dabei können die Kopplungsmittel oder wahlweise die Rückstellfedern in einer im Ventilgehäuse ausgebildeten gemeinsamen Kammer untergebracht sein, welche über einen lösbaren Deckel verschlossen sein kann, um die Zugänglichkeit zu gewährleisten und gleichzeitig eine vor Umwelteinflüssen geschützte Unterbringung dieser Bauteile zu ermöglichen.

Vorteilhafterweise sind die Antriebsmittel für den Ventilschieber nach Art einer Kolben-Zylinder-Einheit ausgebildet, dessen Kolben stimseitig am Ventilschieber angeformt ist. Der Kolben korrespondiert mit einem im Ventilgehäuse ausgeformten Zylinderabschnitt. Die dabei gebildete Steuerkammer wird vorzugsweise über zugeordnete Pilotventile mit einem Steuerdruck beaufschlagt, um die Axialverstellung des zugeordneten Ventilschiebers zu ermöglichen.

Gemäß einer weiteren die Erfindung verbessernden Maßnahme kann dabei das Pilotventil die zugeordnete Steuerkammer zylinderbodenseitig verschließend am Ventilgehäuse dichtend befestigt sein. Diese Anordnung des Pilotventils am Zylindergehäuse gestattet eine direkte Zugänglichkeit zu der Ventilbohrung zum Zwecke der Montage oder Demontage des Ventilschiebers, ohne dass zusätzliche Gehäusebestandteile zum Verschließen der Steuerkammer erforderlich sind.

Gemäß einer weiteren die Erfindung verbessernden Maßnahme ist vorgesehen, dass in mindestens einer Steuerkammer eine Rückstellfeder unterbringbar ist, um anstelle einer Beaufschlagung der Steuerkammer mit Steuerdruck über ein Pilotventil wahlweise auch eine passive Federrückstellung des zugeordneten Ventilschiebers zu ermöglichen. Insoweit ist es hier ausreichend nur eine Steuerkammer mit einem Druckmittel zu beaufschlagen um beide Ventilschieber zu bewegen. Die Rückbewegung erfolgt automatisch bei Entlüftung der Steuerkammer.

Vorzugsweise sind die Kolben achsversetzt gegenüber den zugeordneten Ventilschiebern angeordnet, um zwischen den korrespondierenden benachbarten Ventilbohrungen eine minimale Wandstärke im Ventilgehäuse zu erzielen. Diese Anordnung des Kolbens am Ventilschieber ermöglicht es, ein Ventilgehäuse mit minimalen äußeren Abmessungen zu konzipieren.

Alternativ zu der vorstehend beschriebenen Kolben-Zylinder-Anordnung können die Antriebsmittel auch nach Art eines Elektromagneten mit einem längsbeweglichen Anker ausgebildet werden, dessen Anker dann mit dem Ventilschieber zur Längerverstellung zusammenwirken kann.

Vorzugsweise ist zumindest das Ventilgehäuse aus Kunststoff im Spritzgussverfahren derart hergestellt, dass eine zusätzliche Bearbeitung der Ventilbohrung durch Spanen oder ähnlichem entfallen kann. Auch der Ventilschieber kann aus Kunststoff im Spritzgussverfahren ökonomisch hergestellt werden.

Weitere die Erfindung verbessernde Maßnahmen werden gemeinsam mit der Beschreibung bevorzugte Ausführungsbeispiele der Erfindung anhand der Figuren näher dargestellt. Es zeigt:
- Fig. 1: einen Längsschnitt durch ein Mehrwegeventil mit beidseitiger Steuerdruckbeaufschlagung und 5/2-Ventilfunktion,
- Fig. 2: einen Längsschnitt durch ein Mehrwegeventil mit einseitiger Steuerdruckbeaufschlagung und 5/2-Ventilfunktion, und
- Fig. 3: einen Längsschnitt durch ein Mehrwegeventil mit beidseitiger Steuerdruckbeaufschlagung und 2x3/2-Ventilfünktion.

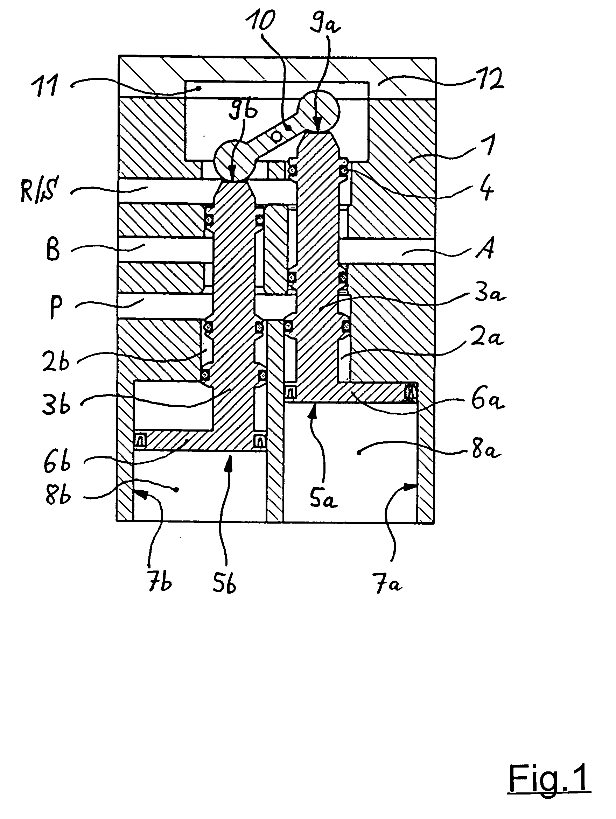

Das pneumatische Mehrwegeventil gemäß Fig. 1 besitzt ein Ventilgehäuse 1, an dem mehrere Fluidanschlüsse P, A, B, R/S angeordnet sind. Innerhalb des Ventilgehäuses 1 sind auf derselben Höhe zwei parallelverlaufende, benachbarte Ventilbohrungen 2a, 2b vorgesehen. Innerhalb der Ventilbohrungen 2a, 2b sind zwei zugeordnete Ventilschieber 3a, 3b längsbewegbar untergebracht. Jeder Ventilschieber 3a, 3b verfügt über Bereiche kleineren und größeren Durchmessers. Bereiche größeren Durchmessers korrespondieren über in entsprechenden Nuten gehaltenen Dichtringen 4 mit dem Ventilgehäuse 1. Durch die Längsbewegung des Ventilschiebers 3a oder 3b werden im Bereich der äußeren Anschlüsse A, B, P, R/S befindliche Steuerkanten von den Bereichen größeren Durchmessers überschritten, wodurch der Druckmittelfluss zwischen den Fluidanschlüssen P, A, B, R/S geschalten wird.

Die Längsbewegung des Ventilschiebers 3a oder 3b wird über an dessen Antriebsstirnseite 5a bzw. 5b angeformte Kolben 6a und 6b bewirkt. Die Kolben 6a und 6b sind direkt stirnseitig am zugeordneten Ventilschieber 3a bzw. 3b achsversetzt angeformt. Jeder Kolben 6a und 6b korrespondiert unter Bildung einer Kolben-Zylinder-Einheit mit einem zugeordneten, im Ventilgehäuse 1 ausgeformten Zylinderabschnitt 7a bzw. 7b. Jede von der Kolben-Zylinder-Einheit gebildete Steuerkammer 8a und 8b ist über zugeordnete (hier nicht weiter dargestellte) Pilotventile mit einem Steuerdruck beaufschlagbar, um eine abwechselnde Längsbewegung der beiden Ventilschieber 3a, 3b zu ermöglichen.

Gegenüberliegend der Antriebsstirnseite 5a und 5b weist jeder Ventilschieber 3a, 3b eine Koppelstirnseite 9a, 9b auf. Die Koppelstirnseiten 9a, 9b korrespondieren mit einem mechanischen Kopplungsmittel, das hier nach Art eines Wippenelements 10 ausgebildet ist, um eine mechanische Kopplung der Bewegungen beider Ventilschieber 3a, 3b zu realisieren.

Die beiden Steuerkammern 8a und 8b werden zur beidseitigen Bewegung der Ventilschieber 3a, 3b wechselnd mit Druckmitteln beaufschlagt. Durch die mechanische Kopplung besitzt das Mehrwegeventil eine bistabile 5/2-Wegeventilfünktion.

Das Wippenelement 10 ist innerhalb einer im Ventilgehäuse 1 ausgebildeten Kammer 11 untergebracht und die Kammer 11 ist über einen lösbaren Deckel 12 verschlossen. Benachbart zur Kammer 11 ist der Fluidanschluss R/S zur Entlüftung angeordnet, um über das Ende der Ventilbohrungen 2a bzw. 2b eine Entlüftung der Kammer 11 im Kontaktbereich der Ventilschieber 3a, 3b zu dem Wippenelement 10 herbeizuführen.

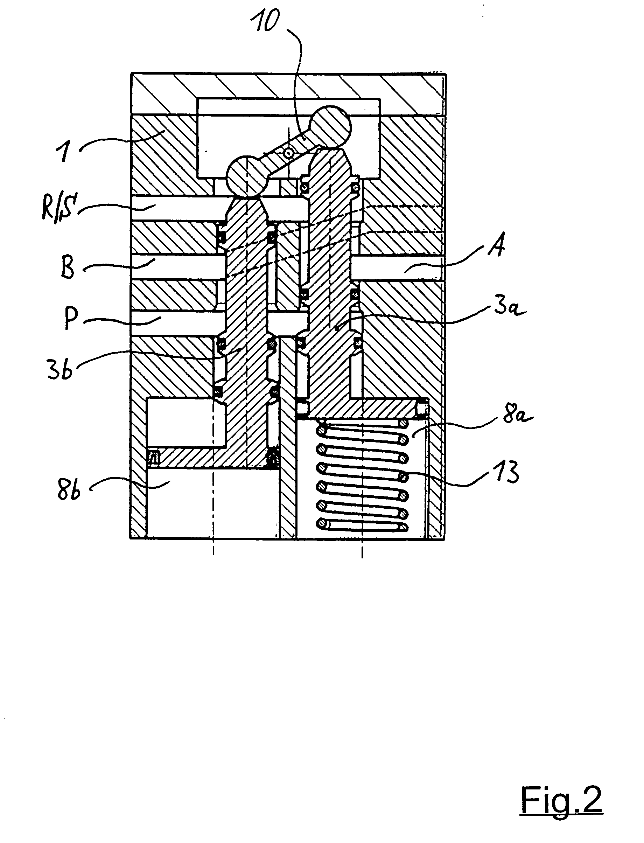

Bei der Ausführungsform gemäß Fig. 2 ist im Unterschied zu der vorstehend beschriebenen Ausführungsform des Mehrwegeventils eine Rückstellfeder 13 innerhalb der Steuerkammer 8a untergebracht. Durch diese Anordnung erfolgt die Verstellung beider Ventilschieber 3a, 3b in eine Richtung über eine Druckbeaufschlagung der Steuerkammer 8b. Die Rückstellung wird über die Rückstellfeder 13 ausgeführt. Ingesamt ergibt sich hierbei eine monostabile 5/2-Wegeventilfunktion.

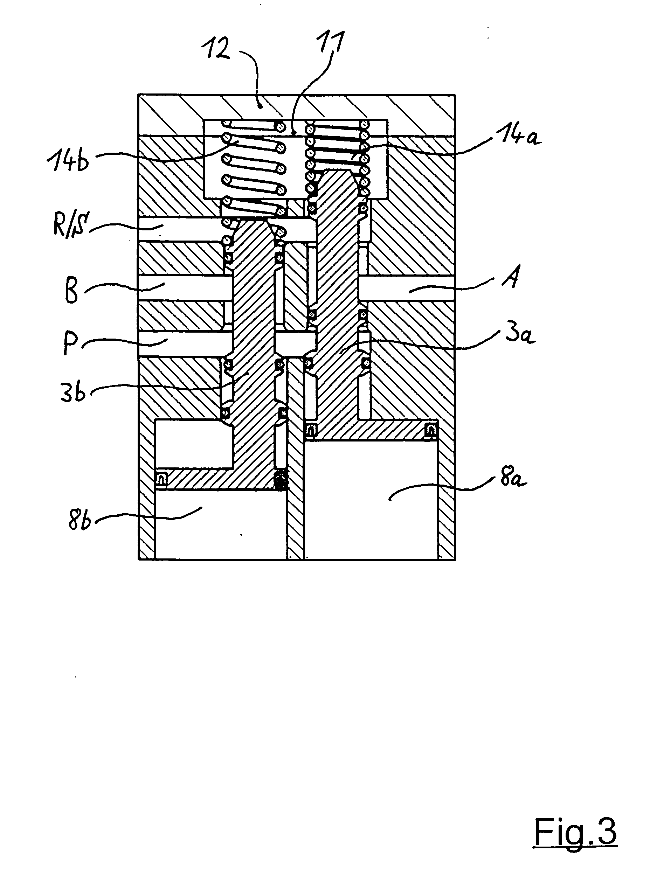

Um gemäß Fig. 3 innerhalb des Ventilgehäuses 1 zwei 3/2-Wegeventilfunktionen zu realisieren, werden anstelle der mechanischen Kopplungsmittel innerhalb der Kammer 11 Rückstellfedern 14a, 14b untergebracht, die zwischen dem Deckel 12 der Kammer 11 sowie jeweils einem zugeordneten Ventilschieber 3a, 3b wirken. Diese Anordnung gestattet ein unabhängiges Schalten beider Ventilschieber 3a, 3b. Das Schalten wird über eine unabhängige Druckmittelbeaufschlagung der zugeordneten Steuerkammern 8a, 8b bewirkt.

Die Erfindung beschränkt sich in ihrer Ausführung nicht auf die vorstehend beschriebenen drei bevorzugten Ausführungsbeispiele. Vielmehr ist eine Anzahl von Varianten denkbar, welche von der dargestellten Lösung auch bei grundsätzlich anders gearteten Ausführungen Gebrauch machen. So ist es beispielsweise auch möglich, weitere Wegeventilfunktionen - beispielsweise mit einer definierten Mittenstellung der Ventilschieber - umzusetzen. Zu diesem Zwecke können weitere Federelemente entsprechend in die Steuerkammern 8a, 8b oder in die Kammer 11 eingesetzt werden.

### Bezugszeichenliste

- **1**: Ventilgehäuse
- **2**: Ventilbohrungen
- **3**: Ventilschieber
- **4**: Dichtelement
- **5**: Antriebsstirnseite
- **6**: Kolben
- **7**: Zylinderabschnitt
- **8**: Steuerkammer
- **9**: Koppelstirnseite
- **10**: Wippenelement
- **11**: Kammer
- **12**: Deckel
- **13**: Rückstellfeder
- **14**: Rückstellfeder

## Patentansprüche

1. Mehrwegeventil zum Schalten eines Druckmittelflusses, insbesondere pneumatisches Mehrwegeschieberventil, mit einem äußere Fluidanschlüsse (P, A, B, R/S) aufweisenden Ventilgehäuse (1), das mindestens eine Ventilbohrung (2a, 2b) zur Aufnahme mindestens eines zugeordneten Ventilschiebers (3a, 3b) mit Abschnitten größeren und kleineren Durchmessers enthält, der innerhalb der Ventilbohrung (2a, 2b) über mehrere Dichtelemente (4) gegenüber dem Ventilgehäuse (1) abgedichtet geführt und über stirnseitig angeordnete Antriebsmittel längs bewegbar ist, wobei über dessen Längsbewegung der Druckmittelfluß zwischen den Fluidanschlüssen (P, A, B, R/S) schaltbar ist,
**dadurch gekennzeichnet, dass** im Ventilgehäuse (1) mehrere benachbarte und im wesentlichen auf derselben Höhe parallelverlaufende Ventilbohrungen (2a, 2b) für jeweils zugeordnete einzelne Ventilschieber (3a, 3b) vorgesehen sind, die an derselben benachbarten Antriebstirnseite (5a, 5b) mit den Antriebsmitteln zusammenwirken, und die seitens der der Antriebstirnseite (5a, 5b) gegenüberliegenden Koppelstirnseite (9a, 9b) mit mechanischen Kopplungsmitteln korrespondieren, die im Ventilgehäuse (1) befestigt sind.

2. Mehrwegeventil nach Anspruch 1,
**dadurch gekennzeichnet, dass** die mechanischen Kopplungsmittel nach Art eines Wippenelements (10) ausgebildet sind, das endseitig mit je einer Koppelstirnseite (9a, 9b) des Ventilschiebers (3a bzw. 3b) zusammenwirkt, um eine 5/2- oder 5/3- Wegeventilfunktion zu schaffen (Fig. 1).

3. Mehrwegeventil nach Anspruch 2,
**dadurch gekennzeichnet, dass** die Enden des Wippenelements (10) im wesentlichen kugelförmig ausgebildet sind, um eine kraftflußoptimale Anlage des Wippenelements (10) im Mittelbereich der Koppelstirnseite (9a, 9b) zu gewährleisten.

4. Mehrwegeventil nach einem der vorstehenden Ansprüche,
**dadurch gekennzeichnet, dass** die mechanischen Kopplungsmittel entfernbar sind und gegen mit den beiden Ventilschiebern (3a, 3b) jeweils zusammenwirkende Rückstellfedern (14a, 14b) austauschbar sind, um wahlweise eine 2x3/n-Wegeventilfunktion zu schaffen (Fig. 3).

5. Mehrwegeventil nach Anspruch 4,
**dadurch gekennzeichnet, dass** die Kopplungsmittel oder die Rückstellfedern (14a, 14b) in einer im Ventilgehäuse (1) ausgebildeten gemeinsamen Kammer (11) untergebracht sind, welche über einen lösbaren Deckel (12) verschlossen ist.

6. Mehrwegeventil nach Anspruch 1,
**dadurch gekennzeichnet, dass** die Antriebsmittel nach Art einer Kolben-Zylinder-Einheit ausgebildet sind, dessen Kolben (6a, 6b) stirnseitig am Ventilschieber (3a, 3b) angeformt ist und mit einem im Ventilgehäuse (1) ausgeformten Zylinderabschnitt (7a, 7b) korrespondiert.

7. Mehrwegeventil nach Anspruch 6,
**dadurch gekennzeichnet, dass** jede von der Kolben-Zylinder-Einheit gebildete Steuerkammer (8a, 8b) über zugeordnete Pilotventile mit einem Steuerdruck beaufschlagbar ist.

8. Mehrwegeventil nach Anspruch 7,
**dadurch gekennzeichnet, dass** jedes Pilotventil die zugeordnete Steuerkammer (8a, 8b) zylinderbodenseitig verschließend am Ventilgehäuse (1) dichtend befestigt ist.

9. Mehrwegeventil nach Anspruch 6,
**dadurch gekennzeichnet, dass** in mindestens eine Steuerkammer (8a) eine Rückstellfeder (13) unterbringbar ist, um anstelle einer Beaufschlagung mit Steuerdruck über ein Pilotventil wahlweise auch eine passive Federrückstellung des zugeordneten Ventilschiebers (3a) zu ermöglichen (Fig.2).

10. Mehrwegeventil nach Anspruch 6,
**dadurch gekennzeichnet, dass** die Kolben (6a, 6b) achsversetzt gegenüber den zugeordneten Ventilschiebern (3a, 3b) angeordnet sind, um zwischen den korrespondierenden Ventilbohrungen (2a, 2b) eine minimale Wandstärke im Ventilgehäuse (1) zu erzielen.

11. Mehrwegeventil nach Anspruch 1,
**dadurch gekennzeichnet, dass** die Antriebsmittel nach Art eines Elektromagneten mit längsbeweglichem Anker ausgebildet sind, dessen Anker mit dem zugeordneten Ventilschieber (3a, 3b) zur Längsverstellung zusammenwirkt.

12. Mehrwegeventil nach einem der vorstehenden Ansprüche,
**dadurch gekennzeichnet, dass** zumindest das Ventilgehäuse (1) aus Kunststoff im Spritzgussverfahren derart hergestellt ist, dass eine zusätzliche Bearbeitung der Ventilbohrungen (2a, 2b) entfällt.
